(19) Europäisches Patentamt / European Patent Office / Office européen des brevets

(11) **EP 3 365 868 B1**

(12) **FASCICULE DE BREVET EUROPEEN**

(45) Date de publication et mention de la délivrance du brevet:
**09.02.2022 Bulletin 2022/06**

(21) Numéro de dépôt: **16826381.2**

(22) Date de dépôt: **15.12.2016**

(51) Classification Internationale des Brevets (IPC):
**G06T 7/00** (2017.01)

(52) Classification Coopérative des Brevets (CPC):
**G06T 7/0012; G06T 7/11;** G06T 2207/10024;
G06T 2207/20104; G06T 2207/30088;
G06T 2207/30096

(86) Numéro de dépôt international:
**PCT/FR2016/053442**

(87) Numéro de publication internationale:
**WO 2017/118785 (13.07.2017 Gazette 2017/28)**

(54) **ANALYSE NUMERIQUE D'UNE IMAGE NUMERIQUE REPRESENTANT UNE PLAIE POUR SA CARACTERISATION AUTOMATIQUE**

DIGITALE ANALYSE EINES DIGITALEN BILDES MIT DARSTELLUNG EINER WUNDE ZUR AUTOMATISCHEN CHARAKTERISIERUNG

DIGITAL ANALYSIS OF A DIGITAL IMAGE REPRESENTING A WOUND FOR ITS AUTOMATIC CARACTERIZATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2016 FR 1650111**

(43) Date de publication de la demande:
**29.08.2018 Bulletin 2018/35**

(73) Titulaire: **URGO RECHERCHE INNOVATION ET DEVELOPPEMENT**
**21300 Chenôve (FR)**

(72) Inventeurs:
• DOMENGER, Jean-Philippe
  33600 Pessac (FR)
• MANSENCAL, Boris
  33600 Pessac (FR)
• STEINBRUNN, Julien
  21380 Messigny et Vantoux (FR)

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
• **MOHAMMAD FAIZAL AHMAD FAUZI ET AL:** "Computerized segmentation and measurement of chronic wound images", COMPUTERS IN BIOLOGY AND MEDICINE., vol. 60, 1 mai 2015 (2015-05-01), pages 74-85, XP055299087, US ISSN: 0010-4825, DOI: 10.1016/j.compbiomed.2015.02.015
• **HAZEM WANNOUS; YVES LUCAS; SYLVIE TREUILLET:** "Efficient SVM classifier based on color and texture region features for wound tissue images", SPIE, PO BOX 10 BELLINGHAM WA 98227-0010 USA, 27 mars 2008 (2008-03-27), XP040434995,
• **JOHN C PLATT:** "Probabilistic Outputs for Support Vector Machines and Comparisons to Regularized Likelihood Methods", ADVANCES IN LARGE MARGIN CLASSIFIERS, X, XX, 26 mars 1999 (1999-03-26), page 11pp, XP009077501, cité dans la demande

**Description**

DOMAINE DE L'INVENTION

L'invention est relative au domaine médical et concerne un procédé d'analyse automatique d'une plaie afin de la caractériser.

CONTEXTE DE L'INVENTION

Une plaie est une rupture de la barrière cutanée. Elle peut ne toucher que la peau (qui est un organe composé de plusieurs couches de tissus) mais aussi impacter la chair en dessous et d'autres éléments du corps humains tels les tendons, etc.

Une plaie peut résulter de différentes causes : blessure par objets coupants ou contendants, brûlure, opération chirurgicale, morsure, chute, etc. De nombreuses situations de la vie de tous les jours sont donc susceptibles de provoquer des plaies.

La cicatrisation d'une plaie est un phénomène biologique naturel, les tissus humains et animaux étant capables de réparer des lésions localisées par des processus de réparation et de régénération qui leur sont propres.

La rapidité et la qualité de la cicatrisation d'une plaie dépendent de l'état général de l'organisme atteint, de l'étiologie de la plaie, de l'état et de la localisation de la plaie, et de la survenue ou non d'une infection, ainsi que des facteurs génétiques prédisposant ou non à des troubles de la cicatrisation.

La cicatrisation naturelle d'une plaie se déroule principalement selon trois phases successives, chacune de ces phases étant caractérisée par des activités cellulaires spécifiques qui font progresser le processus de réparation selon des séquences chronologiques précises : la phase inflammatoire, la phase de granulation (ou phase proliférative), et la phase de formation de la cicatrice.

La première phase, la phase inflammatoire, débute dès la rupture des vaisseaux sanguins qui déclenche la formation d'un caillot (coagulation du sang) principalement composé de fibrine et de fibronectine, et qui va constituer une matrice provisoire. Cette matrice comble en partie la lésion et va permettre la migration au sein de la zone lésée des cellules inflammatoires recrutées pour assurer la détersion de la plaie. Les plaquettes présentes vont également libérer des facteurs (par exemple cytokine, facteurs de croissance) permettant le recrutement des cellules de la cicatrisation comme les cellules inflammatoires (les polynucléaires neutrophiles et les macrophages), les fibroblastes et les cellules endothéliales.

La seconde phase correspond au développement du tissu de granulation. On observe d'abord une colonisation de la blessure par prolifération des fibroblastes. Puis, la migration des cellules endothéliales à partir des vaisseaux sains va permettre la néovascularisation, ou angiogénèse, du tissu lésé. Dans le tissu de granulation, les fibroblastes sont activés et vont se différencier en myofibroblastes présentant des propriétés contractiles importantes, générées par les microfilaments d'actine, permettant la contraction de la plaie. Ces microfilaments sont exprimés par une protéine : l'actine $\alpha$-musculaire lisse. Ces myofibroblastes jouent donc un rôle majeur dans la formation et la maturation du tissu de granulation qui va conduire à la cicatrisation de la lésion. Il y a ensuite migration des kératinocytes et reconstruction de l'épiderme.

La troisième phase du processus de réparation, la formation de la cicatrice ou maturation, s'accompagne d'un remodelage du tissu de granulation. Une partie de la matrice extracellulaire est digérée par des protéases (essentiellement des métallo-protéases matricielles (MMP) et des élastases), et on observe une réorganisation progressive de la matrice extracellulaire. Progressivement, le collagène de type III, majoritaire dans le tissu de granulation, est remplacé par le collagène de type I, principal composant matriciel du derme. A la fin de la phase de maturation, les fibroblastes, myofibroblastes et cellules vasculaires voient leur prolifération et/ou leur activité réduites. Puis les cellules excédentaires meurent par apoptose. Parallèlement au remodelage de la matrice extracellulaire et à l'apoptose des cellules excédentaires, l'état inflammatoire diminue progressivement. Cette phase est la plus longue : au bout d'un an environ, la cicatrice se remodèle, elle n'est plus rouge, ni rigide, et ne provoque plus douleur et elle s'aplanie.

Avoir un suivi du déroulement de la cicatrisation présente un intérêt majeur dans le soin des plaies.

En effet, dans certains cas, la cicatrisation ne se passe pas aussi bien, et certains types de plaies ne cicatrisent pas correctement, les 3 étapes clés du processus se déroulant de manière anormale et ce, malgré la mise en place des meilleures conditions physico-chimiques et biologiques possibles. En effet la rapidité et la qualité de la cicatrisation d'une plaie dépendent de facteurs intrinsèques et extrinsèques. Ce processus de réparation peut donc être anormalement prolongé selon :

- l'étiologie de la plaie ;
- son état et sa localisation ;
- la survenue d'une infection causée par la présence de certains agents infectieux comme *Staphylococcus aureus* ou *Pseudomonas aeruginosa ;*
- l'existence d'une pathologie préexistante (comme le diabète, une déficience immunitaire, une insuffisance veineuse, etc...) ;
- l'environnement extérieur ; ou
- des facteurs génétiques prédisposant ou non à des troubles de la cicatrisation.

Parmi ces plaies, on retrouve les plaies chroniques telles que les ulcères veineux, les escarres ou les plaies caractéristiques des sujets diabétiques, tels que les plaies du pied diabétique.

Les plaies chroniques se définissent par une absence de cicatrisation après un délai de 6 semaines à compter de l'apparition de la plaie et ce quel que soit le traitement appliqué.

Une analyse et un suivi de ces plaies présentent donc un intérêt majeur dans leur prise en charge et leur traitement.

Le but de l'invention est de proposer un outil permettant d'aider une personne à diagnostiquer le type de plaie, et, donc, à déterminer le plus rapidement possible le soin à apporter.

Des propositions ont été faites, par exemple dans le document Mohammad Faizal, Ahmad Fauzi et al, « Computerized Segmentation and Measurements of Chronic wound images » in Computers in Biology and Medecine, vol. 60, 1 mai 2015.

Néanmoins, leurs performances sont améliorables.

RESUME DE L'INVENTION

A ces fins, la présente invention propose un procédé d'analyse numérique d'une plaie pour la détermination automatique d'informations relatives à ladite plaie, comportant des étapes pour :

- acquérir une image numérique d'une zone de peau contenant ladite plaie ;
- déterminer une première carte de vraisemblance associée à une première caractéristique de ladite zone en utilisant un premier classificateur sur ladite image ;
- déterminer une seconde carte de vraisemblance associée à une seconde caractéristique de ladite zone, en utilisant un second classificateur, distinct dudit premier classificateur, sur ladite image ;
- segmenter ladite image en régions de couleur homogène ;
- mettre en correspondance lesdites régions avec lesdites première et seconde cartes de vraisemblance, et adapter lesdites régions afin de déterminer des régions correspondant substantiellement à ladite plaie ;
- déterminer desdites informations à partir desdites régions correspondant substantiellement à ladite plaie ;
- ladite première carte de vraisemblance et ladite seconde carte de vraisemblance sont combinées en une carte de vraisemblance globale afin de mettre en correspondance lesdites régions avec lesdites première et seconde cartes de vraisemblance ;
- dans ladite carte de vraisemblance globale, les points correspondant à de la nécrose sont déterminés par une segmentation basée sur un seuillage colorimétrique.

Suivant des modes de réalisation préférés, l'invention comprend une ou plusieurs des caractéristiques suivantes qui peuvent être utilisées séparément ou en combinaison partielle entre elles ou en combinaison totale entre elles :

- la première caractéristique correspondant à la fibrine, et la seconde caractéristique correspond aux bourgeons ;
- le procédé comprend en outre une étape de détermination d'une troisième carte de vraisemblance associée à une troisième caractéristique de ladite zone, en utilisant un troisième classificateur, ladite troisième caractéristique correspondant à la plaie ;
- lesdits premier et second classificateurs sont des machines à vecteurs de support ;
- ladite image numérique est segmentée en régions par un algorithme de division-fusion ;
- lesdites informations comprennent la taille de ladite plaie ;
- ladite détermination desdites informations comprend une étape de détermination de taux de distribution desdites première et seconde caractéristiques ;
- ladite étape de détermination de taux de distribution desdites première et seconde caractéristiques utilise un classificateur distinguant ladite première caractéristique de la seconde caractéristique au sein de régions correspondant substantiellement à ladite plaie.
- Le procédé comprend une ou plusieurs étapes préalables à la détermination desdites cartes de vraisemblances parmi un centrage de ladite plaie au milieu de ladite image numérique, un calcul d'une carte de probabilité, une mise à l'échelle de l'image numérique acquise, un détourage de ladite plaie au sein de ladite image numérique, un rééquilibrage colorimétrique de ladite image numérique, une mesure de la qualité de ladite image numérique.

Un autre aspect de la présente invention concerne un programme d'ordinateur comportant des instructions prévues pour, lorsqu'elles sont exécutées par un système de traitement de l'information, mettre en œuvre le procédé tel que précédemment décrit.

Un autre aspect de la présente invention concerne un terminal mobile de communication permettant la détermination automatique d'informations relatives à une plaie, comportant un appareil photographique pour acquérir une image numérique d'une zone contenant ladite plaie et des moyens de traitement adaptés pour

- déterminer une première carte de vraisemblance associée à une première caractéristique de ladite zone en utilisant un premier classificateur sur de ladite image ;
- déterminer une seconde carte de vraisemblance associée à une seconde caractéristique de ladite zone, en utilisant un second classificateur, distinct dudit premier classificateur, sur ladite image ;

- segmenter ladite image en régions de couleur homogène ;
- mettre en correspondance lesdites régions avec lesdites première et seconde cartes de vraisemblance, et adapter lesdites régions afin de déterminer des régions correspondant substantiellement à ladite plaie, et
- déterminer lesdites informations à partir desdites régions correspondant substantiellement à ladite plaie et afficher lesdites informations sur un écran dudit terminal de communication ;
- ladite première carte de vraisemblance et ladite seconde carte de vraisemblance sont combinées en une carte de vraisemblance globale afin de mettre en correspondance lesdites régions avec lesdites première et seconde cartes de vraisemblance ;
- dans ladite carte de vraisemblance globale, les points correspondant à de la nécrose sont déterminés par une segmentation basée sur un seuillage colorimétrique.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES DESSINS

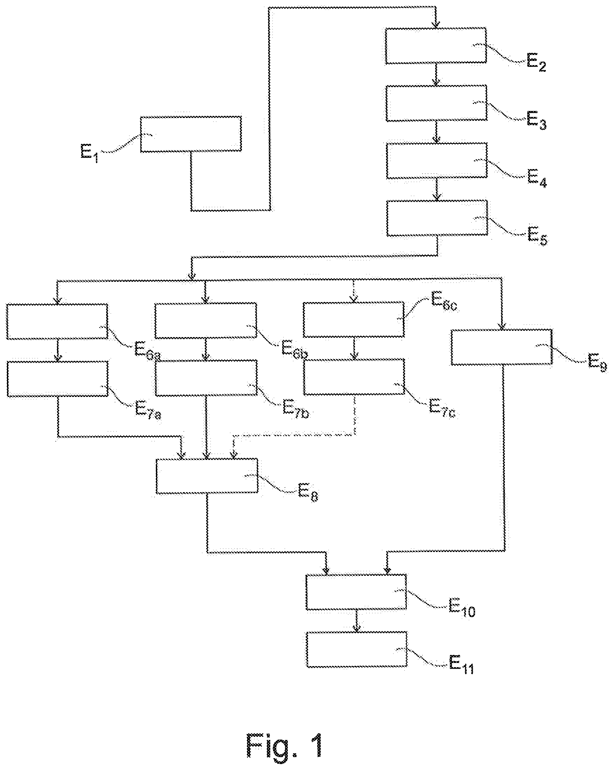

La figure 1 représente schématiquement un exemple d'organigramme selon un mode de réalisation de l'invention.

DESCRIPTION DETAILLEE DE L'INVENTION

Un des objectifs de l'invention est de permettre la caractérisation automatique ou semi-automatique d'une plaie, à partir d'une image numérique d'une zone contenant cette plaie. La caractérisation consiste à déterminer des caractéristiques de la plaie afin d'en permettre le diagnostic.

Plusieurs caractéristiques peuvent être envisagées.

Selon un mode de réalisation de l'invention, on s'attache à trois types de caractéristiques :

- fibrines,
- bourgeons et
- nécroses (ou tissus nécrotiques).

Pour ces trois caractéristiques, on peut déterminer des régions associées au sein de la plaie et/ou des taux par rapport à la plaie ou par rapport à une zone d'intérêt. En connaissant ces caractéristiques, on peut en outre déterminer la taille de la plaie, ou une caractérisation plus haut-niveau et par exemple suivre son évolution au fil du temps.

La nécrose est une forme de dégât cellulaire qui mène à la mort non programmée des cellules dans le tissu cutané. Au contraire de l'apoptose, qui est une mort programmée des cellules, la nécrose entraine une perte de l'intégrité membranaire des cellules. Il en résulte un écoulement de produits issus de la mort cellulaire vers l'espace hors-cellule, ce qui se traduit par un changement de la peau qui devient violacées à brun-noir.

Au stade de nécrose, la plaie est recouverte en totalité ou en partie d'un tissu brun ou noir, sec, plus ou moins adhérent aux berges. Cette nécrose peut être superficielle ou concerner des structures sous-jacentes (tendons), avec de possibles fistulisations sous-cutanées. Il peut exister une infection sous-jacente, avec des signes cliniques sur la peau périlésionnelle (rougeur, chaleur, douleur, œdème,...).

C'est généralement la première phase de l'ulcère, à son apparition. La nécrose peut être spontanée ou post-traumatique.

La cicatrisation est généralement freinée par les débris nécrotiques. Une phase de lyse par les macrophages nettoie la plaie et permet la progression de la cicatrisation. Cette phase est d'autant plus longue que le volume de débris est important et que les problèmes vasculaires à l'origine de la plaie (surpression veineuse, artérielle ou lymphatique) ne sont pas contrôlés. Pour accélérer la cicatrisation à cette étape, on élimine les débris nécrotiques (par détersion, chirurgicale, enzymatique, naturelle, ou à l'aide de moyens thérapeutiques tels que des pansements, gels, etc...)

La fibrine est une protéine filamenteuse issue du fibrinogène sous l'action de la thrombine lors de la coagulation sanguine. La fibrine ne préexiste pas dans le sang ; elle n'apparaît qu'au moment de la coagulation. La coagulation est la transformation du fibrinogène, soluble, par la thrombine en fibrine insoluble qui conduit à la formation d'un caillot. Dans un caillot, la fibrine forme un maillage qui emprisonne les cellules sanguines.

Dans une plaie, la fibrine marque donc une étape normale du processus de coagulation et de cicatrisation du tissu cutanée.

Toutefois, dans le cas de plaies pour lesquelles le processus de détersion naturelle est insuffisant, telles les plaies chroniques, il est nécessaire d'éliminer les tissus fibrineux. L'élimination de ces tissus fibrineux, tout comme l'élimination de tissu nécrotique, peut être réalisée à l'aide de différentes techniques.

L'objectif de la détersion est de nettoyer la plaie, en éliminant les tissus nécrotiques et/ou fibrineux qui sont à l'origine des risques d'infection et peuvent être source de douleur ou d'odeurs désagréables, et tout en sauvegardant le maximum de tissus sains présents dans la plaie.

Le bourgeon est le résultat de la multiplication cellulaire mis en marche lors de la reconstitution du tissu cutanée. Cette étape est appelée classiquement bourgeonnement ou granulation ou encore prolifération, et forme donc une étape ultérieure au développement de la fibrine (parfois appelée phase inflammatoire) dans le processus de cicatrisation.

En conséquence, connaître les proportions de fibrine, de nécrose et de bourgeon dans une plaie permet de déterminer un stade d'évolution au sein du processus de cicatrisation, et, donc, de déterminer un éventuel soin à apporter.

Selon l'invention, dans une étape référencée E1 sur la figure 1, un cliché est pris d'une zone contenant la plaie au moyen d'un appareil photographique numérique ou d'un dispositif fonctionnellement équivalent afin de fournir une image numérique de la plaie.

Selon un mode de réalisation de l'invention, ses différentes étapes peuvent être mises en œuvre par un terminal mobile de communication de type « smartphone » ou « tablette » et l'appareil photographique intégré à ce terminal peut être utilisé pour acquérir l'image numérique de la plaie.

L'acquisition d'une image numérique peut être guidée par différents moyens mis en place par une application logicielle pilotant l'appareil photographique.

Notamment, un guidage peut être mis en place, au moyen d'une fenêtre de centrage, afin d'aider à centrer la plaie au milieu de l'image numérique.

Le centrage de la zone de plaie offre comme avantage supplémentaire de limiter les zones de fond présentes dans l'image à traiter.

Une autre étape initiale, optionnelle, peut consister à déterminer les points de l'image qui ne peuvent pas appartenir à la plaie. Pour cela, à partir d'ensemble d'exemples présentant des zones de plaies et de peau, il a été possible de définir dans un espace colorimétrique un polyèdre maximum qui contient l'ensemble des points de plaies et de peau présents dans les ensembles précédents. Ainsi, tout point situé à l'extérieur de ce polyèdre sera considéré comme un point appartenant au fond, et tout point situé à l'intérieur de ce polygone est susceptible d'appartenir aux zones « peau » ou plaie.

De plus, dans le cas où la plaie est constituée d'une seule composante, son positionnement au centre de l'image numérique offre une information a priori pertinente permettant d'établir une carte de la probabilité qu'un point (ou pixel) de l'image soit de la plaie, qui va décroissant en partant du centre de l'image. Autrement dit, plus un point est près du centre, plus sa probabilité est élevée qu'il appartienne à la zone de plaie. Cette carte de probabilité peut être calculée dans une étape E2 sur la figure 1.

Dans le cas où la plaie est constituée de plusieurs zones disjointes, il peut être proposé à l'utilisateur des moyens lui permettant de pointer chaque zone, par exemple en indiquant un point central pour chaque zone.

La carte de probabilité peut alors être déterminée en calculant pour chaque point de l'image la distance à chacun de ces points centraux, puis en leur affectant la distance minimale.

La distance peut être une distance de Chanfrein par exemple.

Ce mécanisme permet d'améliorer les résultats du procédé selon l'invention, mais forme une étape optionnelle et l'image peut être acquise sans mettre en œuvre un tel mécanisme.

Un autre mécanisme optionnelle peut consister à effectuer un détourage de la ou des plaies au sein de l'image numérique. Cette étape peut être une alternative au centrage précédemment décrit, afin de permettre d'accélérer et d'améliorer les performances du procédé selon l'invention.

Ce détourage permet également de déterminer une carte de probabilité qu'un point de l'image appartienne à la plaie, mais en sens inverse de ce qui a été décrit pour le centrage : plus un point de l'image est éloigné du contour, plus la probabilité est élevée qu'il appartienne à de la plaie.

Une autre étape optionnelle consiste à cumuler les avantages des deux procédés précédents en permettant à l'utilisateur de définir deux ensembles de points :

(i) ensemble des points dont il est sûr qu'ils appartiennent à la plaie ;
(ii) ensemble des points dont il est sûr qu'ils appartiennent à la peau.

Ces deux ensembles sont utilisés pour pondérer les cartes de probabilités, mais aussi pour propager l'information d'appartenance à la peau où à la plaie en utilisant un algorithme d'accroissement de régions (« *region growing* »). L'oracle de propagation permet de contrôler l'expansion, on pourra par exemple, considérer la distance colorimétrique à la moyenne de l'ensemble des points de plaies ou des points de peau.

Une autre étape optionnelle du procédé selon l'invention consiste à effectuer une mise à l'échelle de l'image numérique acquise.

Cette mise à l'échelle peut être effectuée de différentes façons

Une méthode consiste à disposer une mire à proximité de la plaie avant la prise de vue, de sorte qu'elle apparaisse dans l'image numérique. Ainsi, un traitement numérique de l'image permet de déterminer la taille en pixels de la mire et, connaissant la taille réelle (en centimètres) de la mire, il est possible d'en déduire l'échelle de l'image numérique, c'est-à-dire la correspondance entre une dimension exprimée en pixels sur l'image numérique et la dimension correspondante exprimée en centimètres sur la scène photographiée.

Cette mire peut par exemple être une pastille de forme prédéterminée (par exemple, carrée) qui peut être collée ou juste placée à proximité de la plaie avant la prise de vue. Elle peut également avoir une couleur ou un ensemble de couleurs prédéterminées. Le fait que la forme et la couleur soient prédéterminées permet de facilité le traitement numérique subséquent.

Ainsi, le traitement peut comprendre une segmentation de l'image numérique en utilisant une classification de chaque pixel en fonction de sa couleur. Si la couleur du pixel est proche de la couleur de la mire, alors il est classifié comme « mire », sinon il est classifié comme « autre ».

Il est alors intéressant que la couleur de la mire soit prédéterminée de sorte à faciliter la classification, en étant suffisamment éloignée des couleurs susceptibles d'être rencontrée dans une plaie ou sur un tissu cutané. A titre d'exemple, la mire pourra avoir comme caractéristiques colorimétrique : cyan 100% ; magenta 57% ; jaune 12% ; noir 66%.

Une fois cette segmentation obtenue en deux classes, un filtrage morphologique peut être appliquée, par exemple une ouverture topologique avec un carré, afin de compenser certains défauts résiduels et d'agréger les petites régions proches.

A la fin de cette seconde étape, il ne devrait plus rester qu'une seule région correspondance à la mire. S'il en reste davantage, les régions de petite taille peuvent être supprimées. S'il demeure plusieurs régions de taille significative, la région dont la taille se rapproche le plus d'un carré (ou de toute autre forme correspondant à la forme prédéterminée de la mire) est sélectionnée. Pour cela, on peut calculer la boîte englobant orientée de chaque région et déterminer la boîte dont la forme se rapproche le plus d'un carré, par exemple en déterminant le ratio entre la boîte et la surface occupée par la région dans sa boîte.

Une fois la mire déterminée au sein de l'image numérique, il est facile de déduire sa taille en pixels. Connaissant sa taille réelle, on peut en déduire le rapport d'échelle entre l'image numérique et la scène photographiée. Grâce à cette échelle, il est ultérieurement possible de transformer toute dimension exprimée en pixels dans l'image numérique en une dimension réelle exprimée en centimètre. Par exemple, une fois la taille de la plaie déterminée dans l'image numérique, grâce au procédé selon l'invention, il sera possible d'en déduire sa taille réelle sur le tissu cutané.

Une étape de rééquilibrage colorimétrique (E4) peut ensuite être mise en place. Cette étape vise à rendre les étapes ultérieures du procédé de l'invention moins sensibles aux variations colorimétriques qui peuvent être provoquées, notamment, par le capteur de l'appareil photographique, par la luminosité ambiance, par la chaleur de la lumière artificielle (éclairage au néon, au tungstène, etc.)...

Cette étape peut être mise en œuvre de différentes façons, notamment par l'utilisation d'une mire multicolore, ou charte de référence, qui peut être apposée à proximité de la plaie avant la prise de vue.

Elle peut également être mise en œuvre en utilisant la même mire que précédemment pour la détermination de l'échelle. Cette mire contient préférentiellement une référence de blanc afin de pouvoir faire une balance des blancs. Des techniques de rééquilibrage n'utilisant pas de charte de référence peuvent également être utilisées. Il peut par exemple s'agir des algorithmes « Gray world » ou « Retinex » qui permettent la normalisation des couleurs d'une image numérique. L'algorithme « Gray World » a été proposé par G. D. Finlayson, B.

Shiele et J.L. Crowley dans « Comprehensive colour normalization », in Proceedings of European Conférence on Computer Vision (ECCV), vol. I, 475-490, en 1998.

L'ensemble de ces étapes à pour objectif de calculer une transformation permettant de passer de la couleur constatée pour la mire dans l'image numérique à sa couleur réelle. Cette transformation peut alors être appliquée automatiquement à l'ensemble des couleurs présentes dans l'image numérique.

Une autre étape optionnelle du procédé selon l'invention peut consister à effectuer une mesure de la qualité de l'image numérique acquise.

On peut en effet considérer que si la qualité de l'image est insuffisante, les étapes ultérieures ne seront pas en mesure de fournir un résultat satisfaisant et qu'il est donc efficace de stopper le procédé à ce stade, par exemple pour permettre à l'utilisateur de prendre un nouveau cliché.

La mesure de qualité peut se baser sur une mesure de la luminance de l'image numérique.

Selon un premier mode de réalisation, la luminance est estimée de façon globale en étudiant sa distribution sur l'ensemble des pixels de l'image (moyenne et écart type). Selon un second mode de réalisation, l'image numérique est subdivisée en zones, par exemple par l'apposition d'une grille régulière, et la luminance est calculée pour chaque zone de la grille. Nous disposons ainsi d'une information plus fine permettant d'approximer les variations d'éclairage de la prise de vue. En effet, si il existe une trop grande différence en luminance entre deux ensembles connexes de zones de l'images (constitué d'un ensemble d'éléments voisins par fermeture transitive) sous l'hypothèse que les zones de plaies et de peau sont relativement homogène en chrominance, la variation est due alors à une mauvaise condition d'éclairage.

L'invention comporte ensuite une étape (E6a, E6b) de détermination de carte de vraisemblances pour au moins trois caractéristiques de l'image numérique, ou, plus précisément de la zone comportant la plaie et représenté par l'image numérique. Une des caractéristiques de l'invention est que ces cartes de vraisemblances sont déterminées de façon indépendante, par des classificateurs spécifiques et adaptés.

Un premier classificateur permet de déterminer une carte de vraisemblance d'une première caractéristique qui peut être la fibrine, dans une étape E6a. Ce classificateur peut être adapté pour distinguer la fibrine de la peau.

Un second classificateur permet de déterminer une carte de vraisemblance d'une seconde caractéristique qui peut être le bourgeon, dans une étape E6b. Ce classificateur peut être adapté pour distinguer les bourgeons de la peau.

Un éventuel troisième classificateur, optionnel, peut être mis en œuvre pour distinguer la plaie de la peau. Ce troisième classificateur peut permettre d'améliorer les performances du procédé selon l'invention dans certaines circonstances, mais n'est pas indispensable.

Selon un mode de réalisation de l'invention, ces étapes de détermination des cartes de vraisemblance peuvent être réalisées par des classificateurs basés sur un apprentissage supervisé. Il peut par exemple s'agir de classificateurs de type machines à vecteurs de support ou « SVM » pour « Support Vector Machine », en langue anglaise, utilisés en prédiction.

Les machines à vecteurs de support (parfois appelées également séparateurs à vaste marge) sont un ensemble de techniques d'apprentissage supervisé destinées à résoudre des problèmes de discrimination et de régression.

Ils ont été développés en 1995 par Vladimir Vapnik à partir de considérations théoriques sur une théorie statistique de l'apprentissage, et exposés dans « Statistical Learning Theory », publié aux éditions Wiley-Interscience, New-York, 1998. Un brevet américain US 5,649,068 a été délivré également sur l'algorithme originel.

Ils peuvent être vus comme une généralisation des classificateurs linéaires. Un des principes de ces machines à vecteurs de support consiste en effet à changer l'espace des données de sorte qu'un problème de classification non-linéaire soit ramené à un problème de classification linéaire.

En outre, elles reposent sur la détermination d'un hyperplan séparant « au mieux » les données en deux classes, en maximisant la marge, c'est-à-dire en maximisant la distance de « vecteurs supports » avec l'hyperplan.

Cet hyperplan est déterminé lors d'une phase d'apprentissage et permet ensuite de classifier les points de l'image numérique acquise, lors d'une phase d'exploitation.

L'apprentissage peut être effectué sur une base d'apprentissage préalablement définie. Cette base peut être constituée à partir d'images numériques de plaie réelles, pour lequel un expert professionnel détermine la classification correcte.

De façon connue en soi, la machine à vecteurs de support peut « s'entraîner » sur cette base d'apprentissage, c'est-à-dire utiliser les erreurs de la classification pour adapter ses paramètres. Ainsi, par itérations successives, les paramètres (c'est-à-dire essentiellement l'hyperplan) de la machine à vecteurs de support convergent vers une solution optimale qui permettra la classification des points des images numériques soumises, si celles-ci sont conformes à celles soumises pendant la phase d'apprentissage.

La phase d'apprentissage peut se terminer après un nombre prédéterminé de soumission d'images de la base d'apprentissage, ou lorsque les paramètres (c'est-à-dire l'hyperplan) n'évoluent plus substantiellement entre deux itérations.

La base d'apprentissage peut contenir des données étiquetées en 6 classes par exemples : Fibrine 100%, fibrine 75%, neutre 50%, bourgeon 25%, bourgeon 0% et nécrose. Dans cette liste, les pourcentages représentent le ratio de fibrine présent dans la plaie.

Les trois (ou deux) classificateurs peuvent faire l'objet d'apprentissages indépendants dans la mesure où ils doivent apprendre à effectuer des classifications distinctes. Ils sont donc distincts, non nécessairement dans les mécanismes de base (ils peuvent tous être des machines à vecteurs de support), mais dans leurs paramètres.

Le résultat fourni par les machines à vecteurs de support n'est pas directement exploitable. Elles fournissent en effet la valeur d'une fonction de décision qui est la distance signée de chaque point à l'hyperplan qui sépare les deux classes.

Différentes méthodes ont été proposées pour transformer les valeurs générées par un tel classificateur en une distribution de probabilités. Une méthode connue et utilisable est la méthode de Platt. Cette méthode est notamment décrite dans l'article « Probalistic outputs for support vector machine and comparison to regularized likelihood methods » de J. Platt, in A. Smola, P. Bartlett, B. Schölkopf et D. Schuurmans (éditeurs), « Advances in Large Margin Classifiers », Cambridge, MA, 2000, ainsi que dans « A Note on Platt's Probabilistic Outputs for Support Vector Machines » de H.-T. Lin, C.-J. Lin, R. C. Weng, Machine Learning, 68(3=, 267-276, 2007.

Par conséquent, le procédé selon l'invention peut prévoir des étapes E7a, E7b de posttraitement des données fournies par les classificateurs SVM afin de générer des cartes de vraisemblances, par exemple par l'utilisation directe de la méthode de Platt : les cartes de vraisemblances sont construites avec les probabilités ainsi calculées.

Selon un autre mode de réalisation de l'invention, ces étapes de détermination des cartes de vraisemblance peuvent être réalisées par des classificateurs de type « Gradient Boosted Trees » (GBT). De tels classificateurs sont par exemple décrits dans l'article de Jerome Friedman, « Greedy Function Approximation: A Gradient Boosting Machine ». Ils fournissent une réponse binaire, mais sont beaucoup plus rapides que les machines à vecteurs de support.

L'invention n'est donc pas liée à une méthode particulière de classification, mais consiste à effectuer au moins deux classifications selon deux caractéristiques de la plaie.

On obtient donc à ce stade deux cartes de vraisemblance :

- une première carte de vraisemblance associée à la fibrine, qui donne pour chaque point de l'image numérique la probabilité que ce point soit de la fibrine ou non.
- une seconde carte de vraisemblance associée aux bourgeons, qui donne pour chaque point de l'image numérique la probabilité que ce point soit du bourgeon ou non.

Selon un mode de réalisation de l'invention, comme nous avons vu précédemment, une troisième carte de vraisemblance est également générée par une étape de classification E6c et de post-traitement E7c. Cette troisième carte de vraisemblance est associée à une troisième caractéristique de ladite zone, en utilisant un troisième classificateur, cette troisième caractéristique correspondant à la plaie.

Selon un mode de réalisation de l'invention, une deuxième étape de mesure de qualité peut être effectuée à ce stade. Cette étape peut se faire sur la qualité colorimétrique basée sur la classification.

Par exemple, un certain nombre de pixels sont choisis aléatoirement dans l'image numérique (ou dans une zone d'intérêt plus restreinte et contenant la plaie), et on regarde la distribution des classes attribuées à ces pixels. En fonction de la forme de cette distribution, il est possible d'estimer la qualité de la classification qui pourra être effectuée.

Par exemple, si la moyenne est proche de zéro avec un écart-type faible, alors la classification fournira des réponses peu fiables. On peut donc considérer dès cette étape que l'image numérique n'est pas de qualité suffisante pour permettre une bonne caractérisation de la plaie.

Une alerte pourra alors être remontée vers l'utilisateur.

Une fois ces 2 ou 3 cartes obtenues, elles sont combinées dans une étape E8, afin d'obtenir une carte de vraisemblance globale. Cette carte globale donne pour chaque point de l'image la probabilité qu'il corresponde à de la plaie ou à de la peau seine. Par exemple, une échelle de 0 à 255 peut être définie, dans laquelle 0 correspond à une certitude que le point corresponde à de la peau tandis que 255 correspond à une certitude que le point corresponde à de la plaie.

Cette étape de combinaison des cartes de vraisemblance permet la mise en correspondance des cartes de vraisemblances avec la segmentation effectuée à l'étape E9. Il s'agit toutefois d'une étape non-optionnelle, mais selon un mode hors de l'invention, la segmentation peut être projetée sur chacune des cartes de vraisemblances individuellement.

Comme nous l'avions évoqué précédemment, la nécrose correspond à une colorisation particulière du tissu cutané. Il est donc possible de traiter le cas de la nécrose différemment des deux autres caractéristiques (fibrine et bourgeon) quoiqu'un mode de réalisation possible, hors de l'invention, puisse consister à utiliser également une machine à vecteurs de support pour la nécrose et à déterminer ainsi une autre carte de vraisemblance.

Toutefois, selon l'invention, une segmentation basée sur un seuillage colorimétrique est effectuée afin de déterminer les points de l'image numérique correspondant à de la nécrose.

Dans la carte de vraisemblance globale, les points qui ont été déterminés comme correspondant à de la nécrose sont automatiquement étiquetés comme appartenant à la plaie.

Une autre étape E9 du procédé selon l'invention consiste à segmenter l'imagine numérique en régions de couleur homogène. Cette étape est parallèle aux étapes de classification E6a, E6b, E6c et de post-traitement E7a, E7b, E7c d'un point de vue fonctionnel, c'est-à-dire qu'elle ne dépend pas de ces étapes ni en entrée ni en sortie.

D'un point de vue de l'implémentation, elle peut donc être exécutée avant ou après, ou éventuellement en parallèle, si le dispositif sur lequel est implémenté le procédé le permet.

Différents algorithmes de segmentation peuvent être utilisés dans le cadre de l'invention.

Selon un mode de réalisation de l'invention, cet algorithme de segmentation de l'image numérique en régions est un algorithme de segmentation par division/fusion, dit aussi « split and merge » selon la terminologie anglaise. Il a été proposé par Horowitz et Pavlidis dans «Picture Segmentation by Traversal Algorithm », J. ACM, 23, 368-388, 1976.

Le processus est décomposé en deux étapes. L'image initiale peut être une première partition résultant d'une analyse grossière ou bien l'image brute.

Dans la première étape, ou division, on analyse individuellement chaque région. Si celle-ci ne vérifie pas le critère d'homogénéité, alors on divise cette région en blocs (le plus généralement en 4 quadrants) et l'on réitère le processus sur chaque sous-région prise individuellement, le découpage arbitraire peut conduire à ce que cette partition ne soit pas maximale.

Dans la deuxième étape, ou fusion, on étudie tous les couples de régions voisines. Si l'union de ces deux régions vérifie le critère d'homogénéité, alors, on fusionne les régions.

Différentes mises en œuvre de cette méthode ont été proposées (par diagramme de Voronoï, par graphes d'adjacence...). Selon un mode de réalisation de l'invention, l'algorithme des k-moyennes (ou « k-means » en anglais) peut être utilisé pour la division de chaque région ou bloc de l'image numérique.

Selon l'invention, une étape E10 de mise en correspondance des régions obtenues par la segmentation et des cartes de vraisemblance est mise en œuvre.

Si une carte de vraisemblance globale a été déterminée par combinaison des cartes de vraisemblances correspondants à la fibrine et au bourgeon (et éventuellement à la plaie, et éventuellement avec incorporation des informations liées à la nécrose obtenues par segmentation colorimétrique), alors cette mise en correspondance peut être effectuée via cette carte globale.

Cette étape de mise en correspondance peut consister à considérer chaque région obtenue par la segmentation et à analyser la distribution de cette région dans la carte de vraisemblance globale.

En fonction de cette analyse, on adapte les régions afin de déterminer des régions correspondant substantiellement à la plaie.

Si la distribution possède un faible écart-type, on peut considérer que tous les pixels de la région correspondent à une même classe, c'est-à-dire soit à de la peau, soit à de la plaie, en fonction de la moyenne de la distribution. Selon ce mode de réalisation, on considère donc uniquement deux classes et on ne se préoccupe pas, à cette étape E10, de subdiviser la classe « plaie » en fibrine, nécrose ou bourgeon.

Si la distribution possède un trop fort écart-type, la région est divisée en plusieurs sous-régions, et l'on réitère le traitement précédent sur chacune de ces sous-régions.

En fin de processus, et donc une fois une nouvelle segmentation obtenue, on fusionne ensemble les régions de même classe et on peut éventuellement supprimer les classes de trop petite taille. Le seuil pour décider de l'appartenance ou non à une région de plaie peut être un seuil automatique qui dépend de la distribution de la carte de vraisemblance globale.

Enfin, une étape de lissage des contours peut être prévue, afin d'éviter les aspérités. Ce lissage peut être obtenu par un ensemble d'opérateurs morphologiques classiques.

De cette façon les régions sont adaptées et des régions correspondant substantiellement à la plaie sont déterminées. Le terme « substantiellement » fait référence au fait que tout processus de classification automatique n'est correct que selon une marge d'erreur donnée. Ici, cette classification est dépendante de seuils, notamment sur les écarts-types de la distribution qui permet de décider automatique si une région est suffisamment homogène ou non.

Selon un autre mode de réalisation de l'invention, on ne combine pas les cartes de vraisemblance et on ne génère donc pas de carte de vraisemblance globale. La mise en correspondance des cartes de vraisemblance avec les régions issues de la segmentation peut alors se faire en projetant ces régions sur chacune des cartes de vraisemblance.

Un mécanisme de fusion peut alors être mis en place. Dans chaque carte, on part d'un point indiqué comme étant de la plaie (il peut avoir été indiqué par l'utilisateur dans le mécanisme de centrage précédemment décrit), et on fusionne les régions voisines si leur probabilité d'être de la plaie (en fait, de la fibrine, du bourgeon ou de la nécrose, selon la carte de vraisemblance considérée) est supérieure à un seuil donné. Ce seuil est adapté à chacune des cartes de vraisemblances.

Une autre alternative est de considérer l'enveloppe convexe de la zone de plaie déterminée et de vérifier pour chacune des régions non classées comme de la plaie si elles peuvent être agrégées à la zone de plaie. La décision dépend alors de leur probabilité moyenne et du pourcentage de leur surface qui est inclus dans la surface de l'enveloppe convexe.

Il peut être fait attention à ne pas faire de fusion avec une région touchant le bord de l'image.

Cette fusion est répétée tant qu'une région voisine remplit ces critères. Le contour obtenu peut être lissé comme précédemment décrit.

L'invention comprend ensuite une étape E11 de détermination automatique d'informations relatives à la plaie, à partir des régions correspondant substantiellement à la plaie déterminées à l'étape E10 précédente.

Ces informations peuvent comprendre la taille de la plaie.

En effet, l'échelle ayant été préalablement déterminée, il est alors facile de déduire cette taille de la connaissance des régions correspondant à la plaie : il peut par exemple suffire de multiplier le nombre de pixels appartenant à ces régions par la taille en centimètres correspondant à un pixel.

Selon un mode de réalisation de l'invention, cette étape de détermination des informations relatives à la plaie comprend une étape de détermination de taux de distribution des première et seconde caractéristiques, c'est-à-dire typiquement de la fibrine et du bourgeon. Un taux de distribution de la nécrose peut également être déterminé.

Selon un mode de réalisation de l'invention, ces taux peuvent être déterminés en utilisant le même processus que préalablement pour déterminer la plaie, mais d'une part en se basant sur les régions correspondant à la plaie et d'autre part en conservant les informations sur les différentes caractéristiques de la plaie.

Ainsi, une étape de segmentation et une étape de classification peuvent être mises en œuvre, parallèlement, comme précédemment décrites.

L'étape de segmentation consiste à segmenter les régions correspondant substantiellement à la plaie avec un algorithme qui peut être le même que pour l'étape E9 de segmentation de l'image numérique.

L'étape de classification peut se baser sur un nouveau classificateur entrainé à séparer la fibrine du bourgeon (car on sait que dans les régions considérées, on a affaire qu'à de la plaie). Ici aussi, le classificateur peut être une machine à vecteurs de support (SVM) utilisée en régression. La prédiction du classificateur est étalonnée afin de produire un résultat qui prédit le taux de fibrine dans la plaie.

On peut utiliser ici aussi la méthode de Platt pour obtenir une probabilité en sortie du classificateur.

Pour chaque région r déterminée par la segmentation, on peut déterminer un taux de fibrine tf(r) par l'équation :

$$tf(r) = \sum_r f(p) \cdot \frac{S(r)}{S}$$

dans laquelle S(r) est la surface de la région r ; S la surface total des régions correspondant substantiellement à de la plaie et f(p) le résultat d'une fonction de la probabilité p fournie par le classificateur.

Cette fonction f permet d'obtenir un résultat selon une quantification plus réaliste et parlante. Une telle fonction f peut par exemple être de la forme :

$$f(p) = \begin{cases} 0 & si \ p < \alpha_1 \\ 0.25 & si \ \alpha_1 < p < \alpha_2 \\ 0.5 & si \ \alpha_2 < p < \alpha_3 \\ 0.75 & si \ \alpha_3 < p < \alpha_4 \\ 1 & si \ p > \alpha_4 \end{cases}$$

$\alpha_1$, $\alpha_2$, $\alpha_3$, $\alpha_4$ sont des seuils configurables.

Selon ce mode de réalisation, le taux de fibrine varie de 0 à 100% par marches de 25%.

Le taux de fibrine forme une autre information relative à la plaie. Il peut être indiqué à l'utilisateur du procédé selon l'invention, par exemple être affiché sur l'écran d'un terminal mobile de communication.

## Revendications

1. Procédé d'analyse numérique d'une plaie pour la détermination automatique d'informations relatives à ladite plaie, comportant des étapes pour :

    - Acquérir (E1) une image numérique d'une zone de peau contenant ladite plaie ;
    - Déterminer (E6a) une première carte de vraisemblance associée à une première caractéristique de ladite zone en utilisant un premier classificateur sur ladite image ;
    - Déterminer (E6b) une seconde carte de vraisemblance associée à une seconde caractéristique de ladite zone, en utilisant un second classificateur, distinct dudit premier classificateur, sur ladite image ;
    - Segmenter (E9) ladite image en régions de couleur homogène;
    - Mettre en correspondance (E10) lesdites régions avec lesdites première et seconde cartes de vraisemblance, et adapter lesdites régions afin de déterminer des régions correspondant substantiellement à ladite plaie ;
    - Déterminer lesdites informations à partir desdites régions correspondant substantiellement à ladite plaie,

procédé dans lequel ladite première carte de vraisemblance et ladite seconde carte de vraisemblance sont combinées (E8) en une carte de vraisemblance globale afin de mettre en correspondance lesdites régions avec lesdites première et seconde cartes de vraisemblance et dans lequel dans ladite carte de vraisemblance globale, les points correspondant à de la nécrose sont déterminés par une segmentation basée sur un seuillage colorimétrique.

2. Procédé selon la revendication précédente, dans lequel la première caractéristique correspond à la fibrine, et la seconde caractéristique correspond aux bourgeons.

3. Procédé selon l'une des revendications précédentes, comprenant en outre une étape de détermination d'une troisième carte de vraisemblance associée à une troisième caractéristique de ladite zone, en utilisant un troisième classificateur, ladite troisième caractéristique correspondant à la plaie.

4. Procédé selon l'une des revendications précédentes, dans lequel lesdits premier et second classificateurs sont des machines à vecteurs de support.

5. Procédé selon l'une des revendications précédentes, dans lequel ladite image numérique est segmentée (E9) en régions par un algorithme de division-fusion.

6. Procédé selon l'une des revendications précédentes, dans lequel lesdites informations comprennent la taille de ladite plaie.

7. Procédé selon l'une des revendications précédentes, dans lequel ladite détermination desdites informations comprend une étape de détermination de taux de distribution desdites première et seconde caractéristiques.

8. Procédé selon la revendication précédente dans lequel ladite étape de détermination de taux de distribution desdites première et seconde caractéristiques utilise un classificateur distinguant ladite première caractéristique de la seconde caractéristique au sein de régions correspondant substantiellement à ladite plaie.

9. Procédé selon l'une des revendications précédentes, comportant une ou plusieurs étapes préalables à la détermination desdites cartes de vraisemblances parmi

    - un centrage de ladite plaie au milieu de ladite image numérique,
    - un calcul (E2) d'une carte de probabilité,
    - une mise à l'échelle (E3) de l'image numérique acquise,
    - un détourage de ladite plaie au sein de ladite image numérique,
    - Un rééquilibrage colorimétrique (E4) de ladite image numérique,
    - Une mesure (E5) de la qualité de ladite image numérique.

10. Programme d'ordinateur comportant des instructions prévues pour, lorsqu'elles sont exécutées par un système de traitement de l'information, mettre en œuvre le procédé selon l'une des revendications précédentes.

11. Terminal mobile de communication permettant la détermination automatique d'informations relatives à une plaie, comportant un appareil photographique pour acquérir une image numérique d'une zone contenant ladite plaie et des moyens de traitement adaptés pour mettre en œuvre les étapes du procédé de la revendication 1 en utilisant ladite image.

**Patentansprüche**

1. Digitales Analyseverfahren für eine Wunde zur automatischen Bestimmung von Informationen in Bezug auf die Wunde, umfassend Schritte zum:

   - Beziehen (E1) eines digitalen Bilds einer Hautzone, die die Wunde enthält;
   - Bestimmen (E6a) einer ersten Wahrscheinlichkeitskarte, die mit einem ersten Charakteristikum der Zone assoziiert ist, unter Anwendung eines ersten Klassifizierers auf das Bild;
   - Bestimmen (E6b) einer zweiten Wahrscheinlichkeitskarte, die mit einem zweiten Charakteristikum der Zone assoziiert ist, unter Anwendung eines zweiten Klassifizierers, der sich von dem ersten Klassifizierer unterscheidet, auf das Bild;
   - Segmentieren (E9) des Bilds in Regionen mit einheitlicher Farbe;
   - Abgleichen (E10) der Regionen mit der ersten und der zweiten Wahrscheinlichkeitskarte und Anpassen der Regionen, um Regionen zu bestimmen, die im Wesentlichen der Wunde entsprechen;
   - Bestimmen der Informationen aus den Regionen, die im Wesentlichen der Wunde entsprechen,

   ein Verfahren, in dem die erste Wahrscheinlichkeitskarte und die zweite Wahrscheinlichkeitskarte zu einer globalen Wahrscheinlichkeitskarte kombiniert werden (E8), um die Regionen mit der ersten und der zweiten Wahrscheinlichkeitskarte abzugleichen, und in dem in der globalen Wahrscheinlichkeitskarte die Punkte, die Nekrose entsprechen, durch eine Segmentierung auf der Basis einer kolorimetrischen Abstufung bestimmt werden.

2. Verfahren nach dem vorhergehenden Anspruch, in dem das erste Charakteristikum Fibrin entspricht und das zweite Charakteristikum Finnen entspricht.

3. Verfahren nach einem der vorhergehenden Ansprüche, weiterhin umfassend einen Schritt einer Bestimmung einer dritten Wahrscheinlichkeitskarte, die mit einem dritten Charakteristikum der Zone assoziiert ist, unter Anwendung eines dritten Klassifizierers, wobei das dritte Charakteristikum der Wunde entspricht.

4. Verfahren nach einem der vorhergehenden Ansprüche, in dem der erste und der zweite Klassifizierer Support Vector Machines sind.

5. Verfahren nach einem der vorhergehenden Ansprüche, in dem das digitale Bild durch Divisions- /Fusionsalgorithmen in Regionen segmentiert wird (E9).

6. Verfahren nach einem der vorhergehenden Ansprüche, in dem die Informationen die Größe der Wunde umfassen.

7. Verfahren nach einem der vorhergehenden Ansprüche, in dem die Bestimmung der Informationen einen Schritt einer Bestimmung des Verteilungsgrads des ersten und des zweiten Charakteristikums umfasst.

8. Verfahren nach dem vorhergehenden Anspruch, in dem der Schritt der Bestimmung des Verteilungsgrads des ersten und des zweiten Charakteristikums einen Klassifizierer anwendet, der das erste Charakteristikum von dem zweiten Charakteristikum innerhalb von Regionen, die im Wesentlichen der Wunde entsprechen, unterscheidet.

9. Verfahren nach einem der vorhergehenden Ansprüche, umfassend einen oder mehrere Schritte vor der Bestimmung der Wahrscheinlichkeitskarten aus

   - einer Zentrierung der Wunde in der Mitte des digitalen Bilds,
   - einer Berechnung (E2) einer Wahrscheinlichkeitskarte,
   - einer Skalierung (E3) des bezogenen digitalen Bilds,
   - einem Zuschneiden der Wunde innerhalb des digitalen Bilds,
   - einem kolorimetrischen Ausgleich (E4) des digitalen Bilds,
   - einer Messung (E5) der Qualität des digitalen Bilds.

10. Computerprogramm, umfassend Anweisungen, die, wenn sie von einem System zur Verarbeitung der Informationen ausgeführt werden, dazu vorgesehen sind, das Verfahren nach einem der vorhergehenden Ansprüche durchzuführen.

11. Mobiles Kommunikationsendgerät, das die automatische Bestimmung von Informationen in Bezug auf eine Wunde ermöglicht, umfassend eine Kamera zum Beziehen eines digitalen Bilds von einer Zone, die die Wunde enthält, und Verarbeitungsmittel, die zum Durchführen der Schritte des Verfahrens nach Anspruch 1 unter Anwendung des Bilds eingerichtet sind.

## Claims

1. A method for numerical analysis of a wound for the automatic determination of information relating to said wound, including steps to

   - Acquire (E1) a digital image of an area of skin containing said wound,
   - Determine (E6a) a first likelihood map associated with a first characteristic of said area by using a first classifier on said image,
   - Determine (E6b) a second likelihood map associated with a second characteristic of said area, by using a second classifier, distinct from said first classifier, on said image,
   - Segment (E9) said image into homogeneous colour regions;
   - Match (E10) said regions with said first and second likelihood maps, and adapt said regions in order to determine regions substantially corresponding to said wound,
   - Determine said information from said regions substantially corresponding to said wound,

   method wherein said first likelihood map and said second likelihood map are combined (E8) into a global likelihood map in order to match said regions with said first and second likelihood maps and wherein in said global likelihood map, the points corresponding to necrosis are determined by a segmentation based on a colorimetric thresholding.

2. The method according to the preceding claim, wherein the first characteristic corresponds to fibrin, and the second characteristic corresponds to the buds.

3. The method according to one of the preceding claims, further comprising a step of determining a third likelihood map associated with a third characteristic of said area, by using a third classifier, said third characteristic corresponding to the wound.

4. The method according to one of the preceding claims, wherein said first and second classifiers are support vector machines.

5. The method according to one of the preceding claims, wherein said digital image is segmented (E9) into regions by a splitting-merging algorithm.

6. The method according to one of the preceding claims, wherein said information comprises the size of said wound.

7. The method according to one of the preceding claims, wherein said determination of said information comprises a step of determining the rate of distribution of said first and second characteristics.

8. The method according to the preceding claim, wherein said step of determining the rate of distribution of said first and second characteristics uses a classifier distinguishing said first characteristic from the second characteristic within regions substantially corresponding to said wound.

9. The method according to one of the preceding claims, including one or more steps prior to the determination of said likelihood maps among

   - a centring of said wound in the middle of said digital image,
   - a calculation (E2) of a probability map,
   - a scaling (E3) of the acquired digital image,
   - a trimming of said wound within said digital image,
   - A colorimetric rebalancing (E4) of said digital image,
   - A measurement (E5) of the quality of said digital image.

10. A computer program including instructions provided to, when executed by an information processing system, implement the method according to one of the preceding claims.

11. A mobile communication terminal allowing the automatic determination of information relating to a wound, including a photographic apparatus for acquiring a digital image of an area containing said wound and processing means adapted to implement the steps of the method of claim 1 using said image.

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5649068 A

**Littérature non-brevet citée dans la description**

- **MOHAMMAD FAIZAL ; AHMAD FAUZI et al.** Computerized Segmentation and Measurements of Chronic wound images. *Computers in Biology and Medecine,* 01 Mai 2015, vol. 60
- **G. D. FINLAYSON ; B. SHIELE ; J.L. CROWLEY.** Comprehensive colour normalization. *Proceedings of European Conférence on Computer Vision (EC-CV),* 1998, vol. I, 475-490
- Statistical Learning Theory. Wiley-Interscience, 1998
- Probalistic outputs for support vector machine and comparison to regularized likelihood methods. Advances in Large Margin Classifiers. 2000
- **H.-T. LIN ; C.-J. LIN ; R. C. WENG.** A Note on Platt's Probabilistic Outputs for Support Vector Machines. Machine Learning, 2007, vol. 68, 267-276
- **HOROWITZ ; PAVLIDIS.** Picture Segmentation by Traversal Algorithm. *J. ACM,* 1976, vol. 23, 368-388